(19) Europäisches Patentamt
European Patent Office
Office européen des brevets

(11) **EP 4 764 615 A1**

(12) **EUROPEAN PATENT APPLICATION**
published in accordance with Art. 153(4) EPC

(43) Date of publication:
**24.06.2026 Bulletin 2026/26**

(21) Application number: **24856385.0**

(22) Date of filing: **14.08.2024**

(51) International Patent Classification (IPC):
*G01T 5/02* (2006.01)          *G01T 1/17* (2006.01)
*G01T 1/18* (2006.01)

(52) Cooperative Patent Classification (CPC):
**G01T 1/17; G01T 1/18; G01T 5/02**

(86) International application number:
**PCT/JP2024/029015**

(87) International publication number:
**WO 2025/041694 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 JP 2023133583**

(71) Applicants:
• **The University of Tokyo
Bunkyo-ku, Tokyo 113-8654 (JP)**
• **Hun-Ren Wigner Research Centre For Physics
1121 Budapest (HU)**

(72) Inventors:
• **TANAKA,Hiroyuki
Tokyo 113-8654 (JP)**
• **VARGA,Dezso
1121 Budapest (HU)**

(74) Representative: **J A Kemp LLP
80 Turnmill Street
London EC1M 5QU (GB)**

(54) **POSITIONING SYSTEM USING MUONS**

(57)    A positioning system that is capable of stable, highly accurate positioning using lightweight equipment is provided. A positioning system includes a reference detector, a receiving detector, a communication unit for communicating between the reference detector and the receiving detector, and a calculation unit, wherein each of the reference detector and the receiving detector is configured to detect a zenith angle and an azimuth angle of the incident muons; wherein the calculation unit is configured to calculate a relative position of the receiving detector with respect to the reference detector based on at least the zenith angle and the azimuth angle; and wherein each of the reference detector and the receiving detector comprises an internal clock configured to continuously record a time point when a muon is incident, and the calculation unit is further configured to synchronize internal clocks of the reference detector and the receiving detector based on the continuously recorded time information.

FIG. 1B

## Description

### FIELD OF THE INVENTION

The present invention is related to a positioning system using muons. In particular, the present invention is related to a positioning system that uses cosmic ray muons and is capable of stable, highly accurate positioning using lightweight equipment, even inside buildings or underground, where positioning is difficult using conventional global positioning systems (GPS).

### BACKGROUND OF THE INVENTION

One positioning technology available is the Global Positioning System (GPS) technology, which is based on satellite communications. However, because GPS requires radio wave communication with satellites, there is a problem that the accuracy of positioning is significantly reduced inside buildings due to scattered reflections from obstacles such as windows. Also, radio waves cannot reach underground, so positioning using GPS is considered impossible.

In recent years, a muometric positioning system (MuPS) using cosmic ray muons (also called muons) has been proposed (Non-Patent Document 1). Cosmic ray muons are elementary particles produced when cosmic rays accelerated by high-energy events such as supernova explosions in the Milky Way interact with the Earth's atmosphere. Cosmic ray muons have a strong penetrating power and can penetrate any man-made structure at nearly the speed of light in a vacuum. Further, because the intensity of muons is constant regardless of the angle of arrival and the number of muons arriving per unit time is almost constant, the distance between the ground-based reference detector and the underground receiving detector can be determined by measuring the muon's time of flight between the ground-based reference detector and the underground receiving detector.

In addition, in laboratory-scale experiments, these reference and receiving detectors were connected by wires, which severely limited the degree of freedom in navigation. Accordingly, a new wireless muPS system called the Muometric Wireless Navigation System (MuWNS) has been proposed, which functions without requiring a wired configuration between the reference detector and the receiving detector (Non-Patent Document 2).

### PRIOR ART

Non-Patent Literature

[Non-Patent Literature 1] Tanaka, H.K.M. Muometric positioning system ($\mu$PS) with cosmic muons as a new underwater and underground positioning technique. Scientific Reports volume 10, Article number: 18896 (2020)

[Non-Patent Literature 2] Tanaka, H.K.M. Wireless muometric navigation system. Sci Rep 12, 10114 (2022)

### SUMMARY OF THE INVENTION

However, the originally proposed MuWNS requires extremely precise timing accuracy (for example, <300 ps) to distinguish between the TOFs (Time of Flight. In other words, the muon that passed through the reference detector and the receiving detector is the same muon, and the flight time of the muon between the reference detector and the receiving detector.) of identical muon events, which requires expensive components such as atomic clocks. On the other hand, the navigation accuracy remains at 2 m to 14 m, which is far from the level required for practical navigation applications.

The present invention was completed in consideration of the above problems, and in one embodiment, it is an object of the present invention to provide a positioning system that is capable of stable, highly accurate positioning using lightweight equipment.

As a result of extensive research, the inventors have discovered that more flexible and long-term stable positioning is possible based on a principle that is fundamentally different from the principle of measuring the distance between a reference detector and a receiving detector, which is the basis of conventional navigation technology. More specifically, rather than relying on extremely precise timing to identify the same muon event, the same muon event can be identified by synchronizing the internal clocks of the reference detector and the receiving detector and measuring the muon's direction vector, that is, the muon's angle of incidence, with both the reference detector and the receiving detector, enabling stable positioning at low cost. Furthermore, centimeter-level positioning accuracy is possible, which is a significant improvement over conventional technology.

The present invention has been completed based on the above findings, and is exemplified as below.

[1] A positioning system, comprising a reference detector, a receiving detector, a communication unit for communicating between the reference detector and the receiving detector, and a calculation unit,

wherein each of the reference detector and the receiving detector is configured to detect a zenith angle and an azimuth angle of incident muons;

wherein the calculation unit is configured to calculate a relative position of the receiving detector with respect to the reference detector based on at least the zenith angle and the azimuth angle; and

wherein each of the reference detector and the receiving detector comprises an internal clock configured to continuously record a time point when a muon is incident, and the calculation unit is further configured to synchronize internal clocks of the reference detector and the receiving detector based on the continuously recorded time information.

[2] The system according to [1], wherein the calculation unit is configured to:
set a width $T_w$ that is allowed as a time difference between the reference detector and the receiving detector, shift the internal clock of the reference detector or the receiving detector by 0.1 to 1 second, and then count incidence of muons detected by the reference detector and the receiving detector within a time difference of $T_w$, and regard a time shift with the highest count number as a time difference between the reference detector and the receiving detector, thereby establishing synchronization of the internal clocks of the reference detector and the receiving detector.

[3] The system according to [2], wherein the calculation unit is configured to count the incidence of muons by changing the time shift in increments of $2T_w$.

[4] The system according to [2] or [3], wherein the calculation unit is configured to count 10 to 100 incidences of muons to establish synchronization of the internal clocks of the reference detector and the receiving detector.

[5] The system according to any one of [1] to [4], wherein the calculation unit is configured to continuously calculate the position of the receiving detector, and is further configured to obtain N consecutive calculated values (N is an integer equal to or greater than 3), calculate an average value thereof, remove the calculated value farthest from the average value among the N calculated values, average the remaining N-1 calculated values, and output the result as the position of the receiving detector.

[6] The system according to any one of [1] to [5], wherein the reference detector is a multi-wire proportional chamber (MWPC).

According to the present invention, it is possible to provide a positioning system that is capable of performing stable, highly accurate positioning using lightweight equipment.

**BRIEF DESCRIPTION OF THE DRAWINGS**

FIG. 1A is a diagram showing the relationship between the muon collision position $(x_3, y_3, z_2)$ on the receiving detector ("Receiver") and the muon collision position $(x_1, y_1, z_1)$ on the reference detector ("Reference") when the vertical position of the receiving detector (that is, the vertical distance D between the receiving detector and the reference detector) is known. In the figure, "Mu" means muon.

FIG. 1B is a diagram showing the relationship between the muon impact position $(x_3, y_3, z_2)$ on the receiving detector ("Receiver") and the muon impact position $(x_1, y_1, z_1)$ on the reference detector ("Reference") when the vertical position of the receiving detector is unknown.

FIG. 2 shows the results of position tracking when a reference detector is placed on the ceiling of a building and a receiving detector is placed on a horizontal floor, and the receiving detector is moved along a cross-shaped route with a total length of approximately 5 meters.

FIG. 3 shows the results of averaging the receiving detector position calculations for the test shown in FIG. 2.

FIG. 4 illustrates how CTC lock is maintained for over an hour.

FIG. 5 shows a typical "time correlation" plot of a time sequence as a function of the time shift $\Delta t$ between the timestamp of the receiving detector and the timestamp of the reference detector.

FIG. 6 is a diagram showing a schematic configuration of a positioning system according to an embodiment of the present invention.

FIG. 7 is a diagram showing a configuration of a specific example of a positioning system according to the present invention.

## DETAILED DESCRIPTION OF THE INVENTION

Hereinafter, embodiments of the present invention will now be described in detail with reference to the drawings. It should be understood that the present invention is not intended to be limited to the following embodiments, and any change, improvement or the like of the design may be appropriately added based on ordinary knowledge of those skilled in the art without departing from the spirit of the present invention.

(1. Vector MuPs)

First, the principle of positioning using the direction vector of a muon (hereinafter referred to as "vector MuPs") will be described. Unlike MuWNS, in Vector MuPS the position of the receiving detector ("Receiver") is determined by the angle of the incident muon. If the vertical position ($z = D$) is known or given by an external source, then one muon trajectory is sufficient to accurately identify the muon impact location ($x_3, y_3, z_2$) on the receiving detector, that is, the intersection point (Equation (1) below).

$$(x_3, y_3, z_2) = (x_1 + (z_2 - z_1)\tan\theta, y_1 + (z_2 - z_1)\tan\theta\tan\varphi, (z_2 - z_1)) = (x_1 + D\tan\theta, y_1 + D\tan\theta\tan\varphi, D) \tag{1}$$

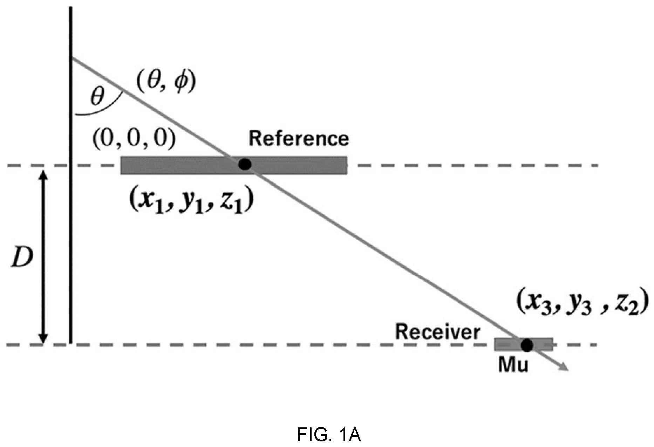

In which, ($x_1, y_1, z_1$) is the impact position of the muon on the reference detector ("Reference"), and $\theta$ and $\varphi$ are the zenith and azimuthal angles of the incident muon (FIG. 1A). It should be noted that $\theta$ and $\varphi$ are in the polar coordinate system.

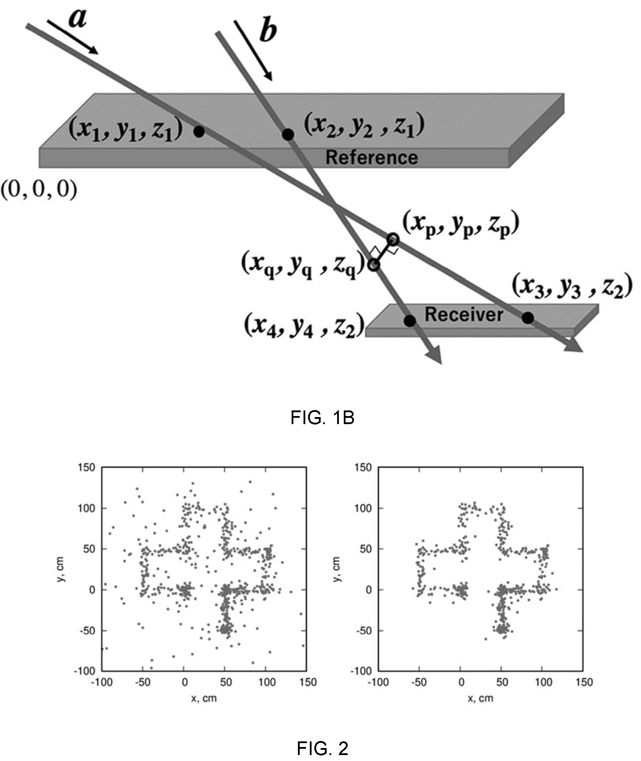

If the vertical position of the receiving detector is unknown, then ($x_2, y_2, z_1$) and ($x_4, y_4, z_2$) are additionally defined as the intersection points of a second muon trajectory and the reference detector, and the intersection points of the second muon trajectory and the receiving detector, respectively. If ($x_2, y_2, z_1$) and ($x_4, y_4, z_2$) are closer than the required position resolution, the three-dimensional position of the receiving detector can be derived from the two muon trajectories. This is because it is reasonable to approximate the position where these two orbits are closest to each other as the position of the receiving detector (FIG. 1B).

For trajectories A and B, vectors a ($a_x, a_y, a_z$) and b ($b_x, b_y, b_z$) and two parameters s and t are introduced, respectively, to define the three-dimensional positions ($x_p, y_p, z_p$) and ($x_q, y_q, z_q$) on trajectories A and B where these two trajectories are closest (Equations (2-1) and (2-2) below).

$$(x_p, y_p, z_p) = (x_1 + sa_x, y_1 + sa_y, z_1 + sa_z) \tag{2-1}$$

$$(x_q, y_q, z_q) = (x_2 + tb_x, y_2 + tb_y, z_1 + tb_z) \tag{2-2}$$

Next, assuming $d_2$ is defined as the distance between the closest points on trajectory A and trajectory B, it can be calculated as shown in Equation (3) below.

$$d^2 = (x_p - x_q)^2 + (y_p - y_q)^2 + (z_p - z_q)^2 \tag{3}$$

Since ($x_1, y_1, z_1$), ($x_2, y_2, z_1$), vector a and vector b are known, there are only two unknown parameters (t and s) in Equations (2-1) and (2-2). For the minimum $d_2$, t and s are obtained by the following binomial Equations (3-1) and (3-2).

$$\partial d^2 \, / \, \partial s = 0 \;\; (3\text{-}1)$$

$$\partial d^2 \, / \, \partial t = 0 \;\; (3\text{-}2)$$

Here, if the distance $[(x_4 - x_3)^2 + (y_4 - y_3)^2]^{1/2}$ is shorter than the required position resolution, since the position where these two muon orbits are closest to each other can be approximated as the position of the receiving detector (Equation (4) below), Equations (3-1) and (3-2) show that by introducing the concept of vectors, two muon orbits are sufficient to identify the position of the receiving detector.

$$(x_p , y_p , z_p) \sim (x_q , y_q , z_q) \sim (x_3 , y_3 , z_2) \sim (x_4 , y_4 , z_2) \;\; (4)$$

When defining the position of the receiving detector in this manner, the maximum position error (z) in the z direction is as below:

$$z = (W_1{}^2 + W_2{}^2)^{1/2} \tan\theta^* \;\; (5)$$

In which, $\theta^*$ is the angle between these two muon orbits, and $W_1$ and $W_2$ are the lengths of the long and short sides of the receiving detector, respectively.
In MuWNS, the following four-term equations must be solved to derive x, y, z, and t:

$$L^2{}_i = (x_i - x_p)^2 + (y_i - y_p)^2 + (z_i - z_p)^2 + ct^2 \;\; (6)$$

in which, L is the distance between the reference detector and the receiving detector, i is the reference detector number (as there can be multiple reference detectors), and c is the speed of light in a vacuum.
Therefore, MuWNS requires at least four muon orbits for three-dimensional positioning and at least three for two-dimensional positioning. On the other hand, Vector MuPS can reduce this number to two or one. Since cosmic ray muons are limited, reducing their number can contribute to significantly speeding up the positioning process. Therefore, in the case of three-dimensional or two-dimensional positioning, the positioning frequency (positioning time resolution) is simply improved by two or three times, respectively. This enables stable and highly accurate positioning. In addition, the result calculated based on the above principle is the relative position of the receiving detector with respect to the reference detector, but since the reference detector is usually placed at a known location, it is possible to identify the location of the receiving detector. In addition, the contents of Non-Patent Liuteratures 1 and 2 are incorporated herein by reference in their entirety.

(2. Positioning Accuracy)

The positioning accuracy is determined by the angular resolution ($\delta\theta$, $\delta\varphi$) of the reference detector and the receiving detector. Assuming that the angular resolutions of the reference detector and the receiving detector are the same, and that the zenith angle resolution $\delta\theta$ and the azimuth angle resolution $\delta\varphi$ are also the same ($\delta\theta = \delta\varphi$), the positioning accuracy ($\delta x$) at (x, y, D) can be expressed as follows:

$$\delta x = \delta\theta [(x - x_1)^2 + (y - y_1)^2 + D^2] \;\; (7\text{-}1)$$

$$\delta x = \delta\theta L \;\; (7\text{-}2)$$

An angular resolution of $\leq 10$ mrad for determining $\theta$ and $\varphi$ is easily achievable with currently available muon detectors, so centimeter-level positioning accuracy is achievable for $L \leq 10$ m. For example, the angular resolution reported in "Olah, L., Tanaka, H.K.M., Ohminato, T. et al. High-definition and low-noise muography of the Sakurajima volcano with gaseous tracking detectors. Sci Rep 8, 3207 (2018)" is 2.7 mrad.
Further, in order to improve the positioning accuracy, it is preferable that the positioning system be able to distinguish between identical muon events. That is, since cosmic ray muons rain down from all angles, there may be muons that are incident only on the reference detector and not on the receiving detector, or muons that are not incident on the reference detector and are incident only on the receiving detector. Even if such muons are detected in a reference detector or a receiving detector, they cannot indicate an accurate position and become noise (also called "background").

FIG. 2 shows the results of position tracking when the reference detector was placed on the ceiling of a building and the receiving detector was placed on a horizontal floor and moved along a cross-shaped route with a total length of approximately 5 meters. The graph on the left plots the results of calculating the positions of all muons detected in the receiving detector, while the graph on the right plots the results of calculating the positions only when muons with the same direction vectors are detected between the reference detector and the receiving detector. In addition, in this test, if the angular difference between the direction vectors detected by the reference detector and the receiving detector is within 80 mrad (4.6 degrees), they are considered to be the same direction vector.

As can be seen from FIG. 2, in the graph on the right, most of the noise has disappeared and the root of the receiving detector has almost the same shape. Therefore, by identifying the same muon event (i.e., the muon that passed through the reference detector and the receiving detector is the same muon), noise can be eliminated and a more accurate position can be calculated.

However, unless the identity of the muon itself can be proven, it is not possible to identify exactly the same muon event, so the above method is essentially statistical. In order to further improve positioning accuracy, it is conceivable to further average multiple measurement values.

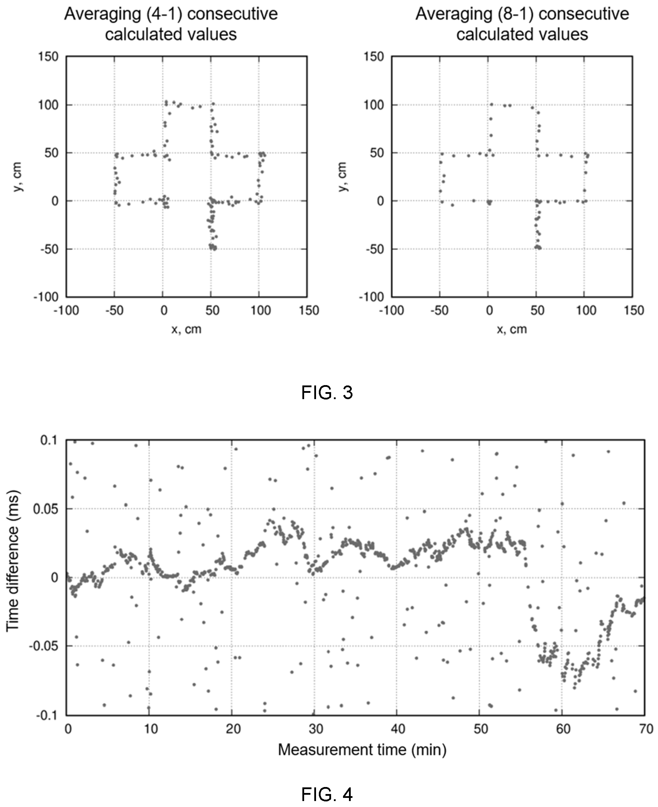

Specifically, it is conceivable to obtain N consecutive calculated values (N is an integer greater than or equal to 3), calculate their average, remove the calculated value farthest from the average among the N calculated values, average the remaining N-1 calculated values, and output the result as the position of the receiving detector. FIG. 3 shows the results of averaging the calculated position values of the receiving detector. In the graph on the left, N = 4, and in the graph on the right, N = 8. It can be seen that averaging more values improves positioning accuracy.

(3. Cosmic time calibration)

A positioning system according to an embodiment of the present invention can identify identical muon events by measuring the direction vector of the muon with both the reference detector and the receiving detector, thereby significantly improving positioning accuracy without using expensive components such as atomic clocks. The reason for this is as follows.

Cosmic ray muons are not frequently incident, so if the reference detector and the receiving detector detect muons incidence with the same direction vector at almost the same time, it is highly likely that this is the same muon event. Therefore, it is possible to identify identical muons even without precise clocks or high-speed wireless communication to reliably and continuously maintain time synchronization between the reference detector and the receiving detector. For example, the width of the time difference between the reference detector and the receiving detector, that is, the time window ($T_W$), may be about 0.1 ms. This is a much looser time window than MuWNS, which requires picosecond-level time accuracy. The time window can be set appropriately depending on the required accuracy, but any time can be selected, for example, 0.2 ms or less, more preferably 0.1 ms or less, even more preferably 0.05 ms or less, and even more preferably 0.01 ms or less. The lower limit of the time window is not particularly limited, but may typically be 0.0001 ms or more, or 0.001 ms or more, or 0.01 ms or more. In some embodiments, the time window can be selected to be any time between 0.0001 ms and 0.2 ms, any time between 0.001 ms and 0.1 ms, or any time between 0.01 ms and 0.05 ms.

Here, in this specification, establishing time synchronization between the reference detector and the receiving detector by relying on the detection of muons is referred to as "Cosmic Timing Calibration" (CTC). The basic concept of CTC is described in "Tanaka, H.K.M. Cosmic time calibrator for wireless sensor network. Scientific Reports volume 13, Article number: 5951 (2023)", the contents of which are incorporated herein by reference.

Since the receiving detector can be moved anywhere, time synchronization between the reference detector and the receiving detector is necessary, given the fact that muons passing through both may be the only means of linking the two. Since the reference detector and the receiving detector are assumed to be located at remote locations, the timing information is assumed to be based on the internal clocks of the reference detector and the receiving detector, respectively. In a positioning system according to an embodiment of the present invention, the internal clocks of the reference detector and the receiving detector are configured to continuously record the time points at which muons are incident, that is, muon events.

Accurate time synchronization can be achieved using the CTC mentioned above. The continuous calculations can be used not only to measure position but also to adjust the internal clock. This allows for continuous synchronization. That is, the reference detector and the receiving detector are "locked" to each other. The level of random background is low enough that once this CTC lock is acquired, it is unlikely to be lost.

FIG. 4 shows how CTC lock is maintained over an hour. The data update rate in this test was 0.31 Hz. That is, successive calculations were taken at intervals of approximately 3 seconds. After obtaining eight updates within the verified time window ($T_W$) = 0.1 ms, the internal clock of the receiving detector was adjusted (offline) to match the internal clock of the reference detector. However, in other embodiments of the present invention, the internal clock of the reference detector may be adjusted to match the internal clock of the receiving detector. The vertical scale indicates the time difference between the trigger timestamps of the receiving and reference detectors. The accumulation of points around zero corresponds to the update, while the scattered points represent the random background. A rolling average of eight updates was used to maintain synchronization of the two completely independent internal clocks. The time difference between updates varied by only about 0.01-0.02 ms in minutes. It can be seen that even with such an internal clock and low update frequency, CTC lock is safely maintained. Therefore, time synchronization can be achieved through commonly used communication techniques without using a particularly precise clock. In this way, stable and highly accurate positioning is possible even when lightweight equipment is used in the receiving detector.

In addition, it should be noted that smart algorithms such as machine learning can be used to optimize the time window values and utilize receiving detector position constraints (for example, eliminating impossible position ranges) to more effectively maintain CTC lock.

It was demonstrated that once a CTC lock was established, time synchronization could be maintained by acquiring and following all subsequent updates. Next, it will be explained how to establish CTC lock on the first (few) updates.

In the first step, both the receiving detector and the reference detector acquire data for several minutes. The amount of data is not particularly limited, but typically 10 to 100 muon incidents, that is, 10 to 100 updates, are recorded. The receiving detector then shares the timestamp with the reference detector via a communication unit, resulting in a time sequence $T_{Rec,1}...T_{Rec,N}$. Similarly, the time sequence of the reference detectors will be $T_{Rec,1}...T_{Rec,M}$ (where both N and M can be integers on the order of $10^4$ to $10^5$). For all combinations (n, m), the time difference $t_{diff} = (T_{Rec,n} - T_{Ref,m})$ can be evaluated (n and m are integers up to N and M, respectively).

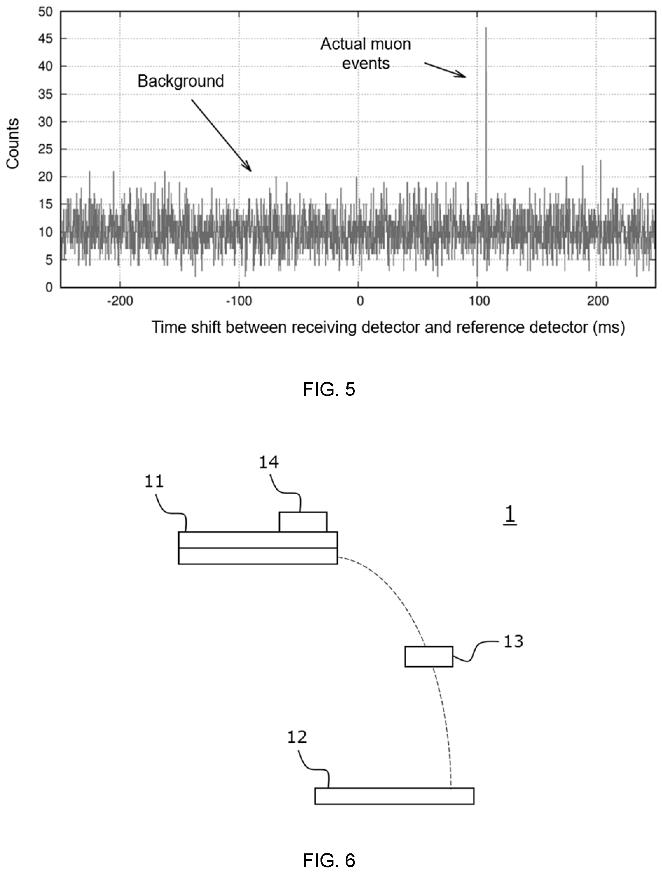

In the next step, the number of times that $-T_W < (t_{diff} - \Delta t) < T_W$ is satisfied is counted for the time sequence in which the muon incidence is detected. $\Delta t$ represents an unknown time shift between the clocks (the time difference between the internal clocks of the receiving detector and the reference detector), and since $\Delta t$ is unknown, it is changed in increments of, for example, $2T_W$ for subsequent calculations. Normally, $\Delta t$ is expected to be in the range of 0.1 to 1 s. Satisfying $-T_W < (t_{diff} - \Delta t) < T_W$ means that due to a time shift of $\Delta t$, the time difference between when the muon incidence is detected by the receiving detector and the reference detector is within $T_W$, and in this case, the same muon event is considered to have been detected and is counted as one. When the $\Delta t$ between the receiving detector and the reference detector becomes the true $\Delta t$, a peak corresponding to the true $\Delta t$ value is expected, since all real identical muon events are counted. In that case, real updates (real muon events) will add up, but at time shifts other than $\Delta t$, only random (background) combinations will be obtained. FIG. 5 shows a typical "time correlation" plot of a time sequence. Data were acquired for 2 minutes at an update rate of 0.6 Hz. The vertical axis indicates the number of counts when the time difference between any combination of muon events is smaller than the time window $T_W$. The counts showing sharp peaks correspond to actual muon events. All other counts are from random background. In this case, the actual time difference between the clocks was approximately 110 ms. The information that the error is accurate to be within $T_W$ can be used to adjust the clocks of the receiver and reference detectors. Thereafter, CTC lock synchronization can be maintained for an arbitrarily long period of time. It should be nted that the direction vector of the injected muon does not need to be taken into account in the CTC locking procedure.

(4. Positioning System)

FIG. 6 shows a schematic diagram of the configuration of a positioning system according to an embodiment of the present invention. The positioning system 1 of this embodiment comprises a reference detector 11, a receiving detector 12, a communication unit 13 for communicating between the reference detector 11 and the receiving detector 12, and a calculation unit 14. There are no limitations on the specific configuration of the reference detector 11 and the receiving detector 12 as long as they have the function of detecting muons. For example, either a Multi Wire Proportional Chamber (MWPC) or a scintillator can be used. However, from the viewpoint of positioning accuracy, it is preferable to use a MWPC. In particular, it is preferable to use a MWPC as the reference detector 11. The MWPC can be constructed, for example, from a plurality of wires arranged at equal intervals on a flat surface. The contents of Japanese Patent Publication No. 2017-198482 are incorporated herein by reference. Further, the MWPC preferably has a structure in which two or more wire chambers are stacked. This is because a higher angular resolution can be achieved. In the embodiment of FIG. 6, the reference detector 11 is shown as a two-layer MWPC. On the other hand, the receiving detector 12 can be any detector such as a scintillator, GEM (Gas Electron Multiplier), MWPC, or GRPC (Glass Resistive Plate Chamber), but a small volume is often preferable. Therefore, if a receiving detector that is already installed in a mobile information communication device such as a mobile phone or tablet terminal is used, there is no need to introduce a new component as a receiving detector. For example, the receiving detector 12 can be configured as a CMOS (Complementary Metal-Oxide-Semiconductor) which is already used in common mobile phone cameras. In addition, although the positioning system 1 includes one receiving detector 12 in the embodiment of FIG. 6, it may include a plurality of receiving detectors 12.

Between the reference detector 11 and the receiving detector 12 there is a communication unit 13 for communication. The communication unit 13 can be a wired or wireless connection, but a wireless connection is preferred for convenient positioning in places such as underground. The wireless connection may be any wireless asynchronous communication channel, such as a wireless local area network (LAN) such as Wi-Fi, Bluetooth, ultrasonic, infrared, or light-based data transfer. Even in this case, as mentioned above, cosmic ray muons are not frequently incident, so it is possible to synchronize the reference detector 11 and the receiving detector 12. Furthermore, by using Cosmic Coding and Transfer (COSMOCAT) technology, it is possible to encrypt location information and enhance security. For information on COSMOCAT technology, see "Tanaka, H.K.M. Cosmic coding and transfer storage (COSMOCATS) for invincible key storage. Sci Rep 13, 8746 (2023)". The entire contents of this publication are incorporated herein by reference.

To achieve time synchronization between the reference detector 11 and the receiving detector 12, each of them includes an internal clock (not shown) configured to continuously record the time when a muon is incident.

The specific configuration of the calculation unit 14 is not limited as long as it has a calculation function. Typically, the calculation unit 14 includes a processor (for example, an electronic processor such as a CPU). Further, the positioning system may also have a non-transitory storage medium (for example, HDD, SSD, and the like) for storing programs for calculations, and these programs may be loaded into memory (for example, RAM and the like) as appropriate and executed by the processor. The calculation unit 14 may be mounted in the reference detector 11, the receiving detector 12, or in any independent location. Furthermore, the calculation unit 14 may be arranged as multiple components in distributed locations. In the embodiment shown in FIG. 6, the calculation unit 14 is mounted on the reference detector 11. If necessary, the calculation unit 14 can be connected to the reference detector 11 or the receiving detector 12, respectively, through communication unit to send and receive information. The communication unit may be any wireless asynchronous communication channel, such as a wireless LAN (Local Area Network) such as Wi-Fi, Bluetooth, ultrasonic, infrared or light-based data transfer.

The calculation unit 14 is further configured to synchronize the internal clocks of the reference detector 11 and the receiving detector 12 based on the continuously recorded time information. Furthermore, the calculation unit 14 may be configured to set a width $T_w$ that is allowed as a time difference between the reference detector and the receiving detector, shift the time of the internal clock of the reference detector 11 or the receiving detector 12, and then count the incidence of muons detected by the reference detector and the receiving detector within a time difference (absolute value) of $T_w$, and regard the time shift with the highest count as the time difference between the reference detector 11 and the receiving detector 12, thereby synchronizing the internal clocks of the reference detector 11 and the receiving detector 12. The specific method is as described above, so it will not be described here.

The calculation unit 14 is configured to calculate the trajectories of the two incident muons based on the zenith angle and azimuth angle of each of the two muons, and to calculate the three-dimensional position at which the two muon trajectories are closest to each other as the position of the receiving detector 12. The specific calculation method is as described above, so it will not be described here.

In addition, the calculation unit 14 may be configured to continuously calculate the position of the receiving detector 12, and further configured to obtain N consecutive calculated values (N is an integer equal to or greater than 3), calculate the average value thereof, remove the calculated value farthest from the average value among the N calculated values, average the remaining N-1 calculated values, and output the result as the position of the receiving detector 12. The specific calculation method is as described above, so it will not be described here.

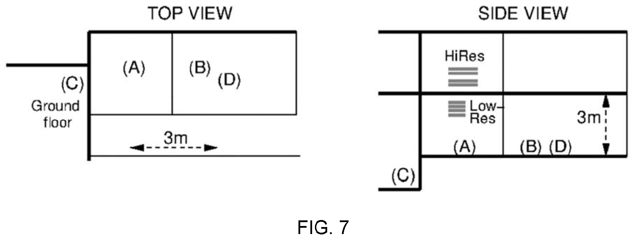

As specific examples of the positioning system of the present invention, the "LowRes" configuration and the "Hires" configuration shown in FIG. 7 were constructed. In the "LowRes" configuration, a small reference detector with an angular resolution of approximately 15 mrad is applied. On the other hand, the "HiRes" configuration is built using a larger area MWPC, improving the angular resolution to 6 to 8 mrad. Furthermore, these two reference detectors were placed on two different floors of the building. Receiving detectors (A) to (D) were placed at the positions shown in FIG. 7.

Table 1 shows the evaluation results of the positioning accuracy and update frequency for each of the above configurations. The positioning accuracy is a value predicted based on the angular resolution of the reference detector, and the actual angular resolution obtained by actually performing positioning. The prediction and measurement of update frequency will be described later.

**Table 1**

| Configuration | Altitude difference D (m) | Average zenith angle $\theta$ (°) | Distance L between detectors (m) | Angular resolution of reference detector (mrad) | Position accuracy (predicted value) (cm) | Position accuracy (measurement value) (cm) | Update frequency $f_U$ (predicted value) (Hz) | Update frequency $f_U$ (measurement value) (Hz) |
|---|---|---|---|---|---|---|---|---|
| LowRes(A) | 2.4 | 2 | 2.4 | 14.7 | 3.5 | 3.90 | 0.52 | 0.54 |
| HiRes (A) | 3.3 | 6 | 3.3 | 6.2 | 2.1 | 2.85 | 0.54 | 0.47 |
| HiRes (B) | 3.3 | 30 | 3.8 | 6.2 | 2.1 | 3.35 | 0.078 | 0.083 |
| HiRes (C) | 4.9 | 18 | 5.2 | 6.2 | 3 | 5.01 | 0.079 | 0.070 |
| HiRes (C) | 3.3 | 46 | 4.7 | 8.2 | 2.7 | 3.93 | 0.041 | 0.043 |

As can be seen from Table 1, the "LowRes" configuration provides a positioning accuracy of 3.90 cm (RMS, root mean square) with the reference detector 2.4 m above the receiving detector. On the other hand, in the "HiRes" configuration, when the distance D (altitude difference) between the reference detector and the receiving detector is 3.3 m, the positioning accuracy improved to about 3 cm (RMS).

In addition, the update frequency $f_U$ is defined as the number of muons that can be confirmed to pass through both the reference detector and the receiving detector divided by the measurement time. Based on cosmic ray muons, the update frequency can be predicted as follows.

The muon flux $\Phi$ is related to the muon velocity R detected from the solid angle region $\Delta\Omega$ according to the following Equation (8) (reference: "Olah, L., Tanaka, H. K. M., & Varga, D. (eds) Muography: Exploring Earth's Subsurface with Elementary Particles. Geophysical Monograph270. American Geophysical Union, John Wiley & Sons, Inc.: Hoboken, NJ, USA, ISBN 9781119723028 (2022)"):

$$R / (\Delta\Omega) = \Phi(\Theta)S(\Theta) \quad (8)$$

Herein, all quantities, including the effective detector area $S(\Theta)$, depend on the direction vector $\Theta$. Assuming that the receiving detector is located below the reference detector, the update frequency $f_U$ can be estimated as follows:

$$f_U = \Phi_{Rec}S_{Rec}\Delta\Omega_{Ref} \quad (9)$$

in which, $\Delta\Omega_{Ref}$ is the field of view angle of the reference detector as seen from the position of the receiving detector ("Ref" means the reference detector and "Rec" means the receiving detector). This quantity can be approximated as follows:

$$\Delta\Omega_{Ref} \approx S_{Ref} / D^2 \quad (10)$$

Since muons follow a straight trajectory, the direction vector $\Theta$ of both detectors is the same, so the update frequency can be estimated as follows:

$$f_U \approx \Phi_{Rec}S_{Rec}S_{Ref} / D^2 = (R_{Rec} / \Delta\Omega) (R_{Ref} / \Delta\Omega) / (\Phi_{Ref}D^2) \quad (11)$$

In Equation (11), the second calculation of $f_U$ is particularly convenient because it directly uses $R / \Delta\Omega$, which is measurable. The muon flux $\Phi$Ref in the reference detector can now be easily estimated or measured by the formula $\Phi$Ref $\approx$ 100 $\cos^2(\theta)m^{-2}s^{-1}$, assuming that the building roof is sufficiently thin. This formula holds true when the receiver is underground and the flux $\Phi_{Rec}$ (and accordingly $R_{Rec}$) is attenuated.

There is a difference between the estimated and measured values, and the estimated $f_U$ can have an uncertainty of as much as 20% including all systematic errors.

The above descriptions of the embodiments are merely descriptions of some preferred embodiments of the present invention, and the configurations of the embodiments can be combined in any manner based on the ordinary knowledge of those skilled in the art, as long as they do not deviate from the spirit of the present invention.

Description of Reference Numerals

1. Positioning System

11. Reference Detector

12. Receiving Detector

13. Communication Unit

14. Calculation Unit

**Claims**

1. A positioning system, comprising a reference detector, a receiving detector, a communication unit for communicating between the reference detector and the receiving detector, and a calculation unit,

   wherein each of the reference detector and the receiving detector is configured to detect a zenith angle and an azimuth angle of incident muons;
   wherein the calculation unit is configured to calculate a relative position of the receiving detector with respect to the reference detector based on at least the zenith angle and the azimuth angle; and
   wherein each of the reference detector and the receiving detector comprises an internal clock configured to continuously record a time point when a muon is incident, and the calculation unit is further configured to synchronize internal clocks of the reference detector and the receiving detector based on the continuously recorded time information.

2. The system according to claim 1, wherein the calculation unit is configured to:
   set a width $T_w$ that is allowed as a time difference between the reference detector and the receiving detector, shift the internal clock of the reference detector or the receiving detector by 0.1 to 1 second, and then count incidence of muons detected by the reference detector and the receiving detector within a time difference of $T_w$, and regard a time shift with the highest count number as a time difference between the reference detector and the receiving detector, thereby establishing synchronization of the internal clocks of the reference detector and the receiving detector.

3. The system according to claim 2, wherein the calculation unit is configured to count the incidence of muons by changing the time shift in increments of $2T_w$.

4. The system according to claim 2 or 3, wherein the calculation unit is configured to count 10 to 100 incidences of muons to establish synchronization of the internal clocks of the reference detector and the receiving detector.

5. The system according to claim 1 or 2, wherein the calculation unit is configured to continuously calculate the position of the receiving detector, and is further configured to obtain N consecutive calculated values (N is an integer equal to or greater than 3), calculate an average value thereof, remove the calculated value farthest from the average value among the N calculated values, average the remaining N-1 calculated values, and output the result as the position of the receiving detector.

6. The system according to claim 1 or 2, wherein the reference detector is a multi-wire proportional chamber (MWPC).

FIG. 1A

FIG. 1B

FIG. 2

Averaging (4-1) consecutive calculated values

Averaging (8-1) consecutive calculated values

FIG. 3

FIG. 4

FIG. 5

FIG. 6

TOP VIEW

(A)  (B) (D)

(C)
Ground floor

3m

SIDE VIEW

HiRes

Low-Res

(A)  (B) (D)

(C)

3m

FIG. 7

## INTERNATIONAL SEARCH REPORT

| International application No. |
|---|
| **PCT/JP2024/029015** |

| **A.** | **CLASSIFICATION OF SUBJECT MATTER** |
|---|---|

*G01T 5/02*(2006.01)i; *G01T 1/17*(2006.01)i; *G01T 1/18*(2006.01)i
FI:  G01T5/02; G01T1/18 D; G01T1/17 E

According to International Patent Classification (IPC) or to both national classification and IPC

| **B.** | **FIELDS SEARCHED** |
|---|---|

Minimum documentation searched (classification system followed by classification symbols)

G01T5/02; G01T1/17; G01T1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | TANAKA, Hiroyuki K. M. Muometric positioning system (μPS) with cosmic muons as a new underwater and underground positioning technique. Scientific Reports. 10. article number 18896(2020). 03 November 2020<br>entire text, all drawings | 1-6 |
| A | TANAKA, Hiroyuki K. M. Wireless muometric navigation system. Science Reports. 12. article number 10114(2022). 16 June 2022<br>entire text, all drawings | 1-6 |
| A | TANAKA, Hiroyuki K. M. Cosmic time calibrator for wireless sensor network. Science Reports. 13. article number 5951(2023). 12 April 2023<br>entire text, all drawings | 1-6 |
| A | WO 2021/237288 A1 (SWINBURNE UNIVERSITY OF TECHNOLOGY) 02 December 2021 (2021-12-02)<br>fig. 1 | 1-6 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/029015** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021/046602 A1 (SWINBURNE UNIVERSITY OF TECHNOLOGY) 18 March 2021 (2021-03-18)<br>     fig. 1 | 1-6 |
| A | JP 2010-508521 A (LOS ALAMOS NATIONAL SECURITY, LLC) 18 March 2010 (2010-03-18)<br>     fig. 4 | 1-6 |

Form PCT/ISA/210 (second sheet) (July 2022)

**INTERNATIONAL SEARCH REPORT**
Information on patent family members

International application No.

**PCT/JP2024/029015**

| Patent document cited in search report | | | Publication date (day/month/year) | Patent family member(s) | | | Publication date (day/month/year) |
|---|---|---|---|---|---|---|---|
| WO | 2021/237288 | A1 | 02 December 2021 | US | 2023/0291407 | A1 | |
| | | | | EP | 4158362 | A4 | |
| | | | | AU | 2021279207 | A | |
| WO | 2021/046602 | A1 | 18 March 2021 | US | 2022/0326397 | A1 | |
| | | | | EP | 4028796 | A4 | |
| | | | | AU | 2020345858 | A | |
| JP | 2010-508521 | A | 18 March 2010 | US | 2008/0191133 | A1 | |
| | | | | WO | 2008/118209 | A2 | |
| | | | | EP | 2087372 | A4 | |
| | | | | CA | 2667446 | A | |
| | | | | CN | 101606082 | A | |
| | | | | IL | 198295 | A | |
| | | | | AU | 2007349817 | A | |
| | | | | SG | 175686 | A | |
| | | | | RU | 2009119985 | A | |
| | | | | HK | 1134139 | A | |
| | | | | ES | 2891090 | T | |
| | | | | AU | 2012254928 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017198482 A

**Non-patent literature cited in the description**

- *Scientific Reports*, 2020, vol. 10 (18896)
- **TANAKA, H.K.M.** Wireless muometric navigation system.. *Sci Rep*, 2022, vol. 12, 10114
- **OLAH, L.** ; **TANAKA, H.K.M.** ; **OHMINATO, T. et al.** High-definition and low-noise muography of the Sakurajima volcano with gaseous tracking detectors.. *Sci Rep*, 2018, vol. 8, 3207
- **TANAKA, H.K.M.** Cosmic time calibrator for wireless sensor network.. *Scientific Reports*, 2023, vol. 13 (5951)
- **TANAKA, H.K.M.** Cosmic coding and transfer storage (COSMOCATS) for invincible key storage.. *Sci Rep*, 2023, vol. 13, 8746
- Muography: Exploring Earth's Subsurface with Elementary Particles. Geophysical Monograph270. American Geophysical Union. John Wiley & Sons, Inc, 2022